# EUROPÄISCHE PATENTSCHRIFT

(11) **EP 0 511 157 B1**
(45) Veröffentlichungstag und Bekanntmachung des Hinweises auf die Patenterteilung: **04.01.1995**
(21) Anmeldenummer: 92810207.8
(22) Anmeldetag: 23.03.1992
(51) Int. Cl.: B60R 13/08

(54) **Schallabsorbierendes Fahrzeugteil**
Vehicle sound-absorbing structure
Partie insonorisante d'un véhicule automobile

(30) Priorität: 26.04.1991 CH 1265/91
(43) Veröffentlichungstag der Anmeldung: 28.10.1992
(73) Patentinhaber: MATEC HOLDING AG, CH-8700 Küsnacht (CH)
(72) Erfinder: Schmuck, Jean-Claude, F-27120 Pacy-sur-Eure (FR); Jeannot, Claude, F-78300 Poissy (FR); Buisson, Claude, F-78700 Conflans Sainte Honorine (FR)
(74) Vertreter: Ritscher, Thomas, Dr.

(56) Entgegenhaltungen:
- EP-A- 0 244 755
- EP-A- 0 262 092
- DE-A- 2 510 607
- GB-A- 944 433
- US-A- 4 131 664
- PATENT ABSTRACTS OF JAPAN vol. 10, no. 167 (M-488)(2223) 13. Juni 1986 & JP-A-61 018 538

## Beschreibung

Die vorliegende Erfindung betrifft ein formstabiles Verbundteil zur Abschirmung von Lärmquellen gemäss der Präambel des Anspruchs 1 und eine dazugehörige Innenpackung gemäss Präambel des Anspruchs 6, sowie ein Verfahren zur Herstellung dieses Verbundelementes.

Verbundteile dieser Art werden vorwiegend in der Automobilindustrie verwendet und dort insbesondere als integrierte Motorhauben eingesetzt.

Die Automobilindustrie ist in zunehmendem Masse an schallisolierenden Bauelementen interessiert und ist bemüht, diese auch bei der Herstellung der Fahrzeuge in die Fertigungslinien aufzunehmen.

So ist beispielsweise aus der EP-B-111 430 eine Haube für den Motorraum eines Kraftfahrzeuges bekannt, welche an ihrer Innenseite mit einer schalldämmenden Packung versehen ist. Diese Packung besteht aus geeignetem Material, insbesondere aus gepresstem Fasermaterial, und weist stegartige Verformungen auf, welche diese Packung im montierten Zustand von der Haube beabstanden. Die derart entstehenden Hohlräume zwischen Packung und Haube wirken schallabsorbierend. Diese Packung ist selbsttragend, d.h. entsprechend verdichtet und schwer. Die Verwendung solcher selbsttragenden Packungen führt zu unerwünscht schweren Motorhauben und weist alle montagetechnischen Probleme auf, wie sie in der Fahrzeugfertigung hinlänglich gekannt sind.

Aus der DE-C-25 10 607 ist ein schallisolierendes Verkleidungselement für die Innenseite einer Motorhaube bekannt, mit mehreren Ausbuchtungen, welche zusammen mit der Motorhaube einen luftgefüllten Raum begrenzen, dessen Dimensionierung eine optimierte akustische Absorption im tiefen und mittleren Frequenzbereich erzeugt. Dieses Verkleidungselement ist im wesentlichen selbsttragend und wird an Versteifungsrippen der Motorhaube befestigt. Auch dieses Bauteil wird erst nach der Fertigstellung des Fahrzeugs montiert und erfordert eine unerwünscht steife Motorhaube. Ziel der modernen Fahrzeugindustrie ist es jedoch, für die passive Sicherheit der Fahrzeuginsassen die Bug- und Heckpartie als verformbare Knautschzonen, d.h. mit einer den erwarteten Belastungen entsprechenden und variablen Steifigkeit auszubilden.

Zusätzlich angebrachte Elemente, beispielsweise zur Schallisolation, bedingen also eine erhöhte Steifigkeit der Aussenhaut und führen zu unerwünschtem Mehrgewicht.

Es ist deshalb die Aufgabe der vorliegenden Erfindung, die schallisolierende Wirksamkeit solcher miteinander verbundenen Bauteile zu erhöhen, ohne das Gewicht des gesamten Verbundteils zu erhöhen und ohne die den Erfordernissen entsprechende Steifigkeit zu beeinträchtigen.

Diese Aufgabe wird durch die Kombination der Merkmale des Anspruchs 1 gelöst.

Erfindungsgemäss wird dazu eine leichtgewichtige Aussenhaut mit geringer Steifigkeit und eine besonders strukturierte, leichte Innenpackung zu einem formstabilen Verbundteil zusammengefügt.

Die für die Herstellung des erfindungsgemässen Verbundteils verwendete Innenpackung zeichnet sich im wesentlichen durch verschiedene, unterschiedlich verdichtete und verformte Teilbereiche aus. Einen wesentlichen Teil bilden senkenartig verformte Bereiche mit biegeweicher, akustisch wirksamer Beschaffenheit, während stark verpresste Bereiche für die Stabilität des ganzen Verbundteils vorgesehen sind. Diese stark verpressten Bereiche weisen auch sickenartige Verformungen auf und können mit Kunststoff gefüllte Näpfe aufweisen, welche der Fixierung von Halterungselementen dienen.

Für die Herstellung des erfindungsgemässen Verbundteils wird die Innenpackung mit einer abreissbaren Folie versehen, damit mit der Farbbehandlung, beispielsweise im Tauchbad, die akustischen Eigenschaften der Innenpackung nicht beeinträchtigt werden.

In einer bevorzugten Ausführungsform werden für das Verbundteil superleichte, faserverstärkte Kunststoffe verwendet, wie sie der Fachmann aus dem modernen Karosseriebau kennt. Besonders geeignet sind dazu alle abbaubaren resp. natürlichen Werkstoffe, insbesondere chitinhaltige Substanzen und Harzgemische mit tierischen oder Pflanzlichen Naturfaser, wie Baumwollfasern, Bananenfaser etc. Insbesondere werden für die Innenpackung mit abbaubaren Kunstharzen verklebte Cellulosefasern verwendet.

Die Vorteile des erfindungsgemässen Verbundteils gegenüber den bisherigen schallisolierenden Konstruktionen sind offensichtlich.

Insbesondere kann erstmals ein Verbundteil mit maximaler Schallisolationswirksamkeit bei gleichzeitiger Reduktion des Gewichtes geschaffen werden und wird mit dem erfindungsgemässen Verbundteil eine bisher unbekannte freie Gestaltungsmöglichkeit für die Steifigkeit des Verbundteils erreicht. Weitere Vorteile betreffen Fertigungs- und Montageaspekte. Insbesondere fällt das Montieren der bis anhin relativ schweren, schlaffen und krümmeligen Schallisolationsmatten weg und kann das Verbundteil bereits mit der Isolationspackung ins Farbbad getaucht werden. Dies wird durch die erzielte Steifigkeit vereinfacht und durch die auf der Innenpackung aufgebrachte Schutzfolie erst ermöglicht, da bei schallisolierenden Packungen in der Regel die Gefahr besteht, das Farbbad zu verschmutzen.

Ein weiterer Vorteil des erfindungsgemässen Verbundteils besteht darin, dass die Halterungselemente für die Befestigung des Verbundteils, beispielsweise Scharnierteile oder Schlossteile, direkt an der Innenpackung fixiert sind.

Damit wird nicht nur die Herstellung der Aussenhaut wesentlich vereinfacht, sondern erhalten die direkt in die Versteifungszonen integrierten Halterungselemente auch den benötigten Halt im Verbundteil.

In einer bevorzugten Ausführungsform weist die mit einer Dekorschicht versehene Innenpackung unter der Dekorschicht eine Mikroorganismen abweisende, aber luftdurchlässige Netzschicht auf. Diese mikroporöse Netzschicht schützt im wesentlichen den wenig verdichteten, akustisch wirkenden Bereich vor unerwünschten äusseren Einflüssen, wie Temperatur, Luftfeuchtigkeit, Mikroben- und Pilzbefall, Fremdgerüchen, Oelen, Fetten, d.h. Verschmutzungen aller Art.

Im weiteren umfasst die vorgefertigte Innenpackung eine abziehbare Schutzfolie, welche nur über der mit der Dekorschicht versehene Seite der Innenpackung liegt und während der letzten Formpressung problemlos an den Rand der Innenpackung gesiegelt werden kann. Die Folie ist wesentlich für die Fertigung des montagebereiten Verbundteils, damit einerseits die Dekorschicht und die akustisch wirksamen Bereiche nicht mit Farblack verklebt werden und andererseits das Farbbad vor abkrümmelnden Verschmutzungen bewahrt wird. Diese Schutzfolie ist nach der Behandlung in einfacher Weise wieder zu entfernen.

Weitere bevorzugte Merk.male des erfindungsgemässen Verbundteils, der zur Herstellung benötigten Innenpackung sowie des Verfahrens zur Herstellung des Verbundteils ergeben sich aus den Ansprüchen.

Nachfolgend soll die Erfindung anhand eines Ausführungsbeispiels und mit Hilfe der beigefügten Figuren näher beschrieben werden.
- Fig. 1: zeigt eine schematische Aufsicht auf eine erfindungsgemässe Innenpackung für eine Motorhaube;
- Fig. 2: zeigt einen schematischen Querschnitt durch ein erfindungsgemässes Verbundelement;
- Fig. 3: zeigt einen schematischen Querschnitt durch ein erfindungsgemässes Verbundelement mit einem Halterungselement;
- Fig. 4: zeigt eine schematischen Querschnitt durch ein erfindungsgemässes Verbundelement mit einer der Aussenhautform angepasster Innenpackung.

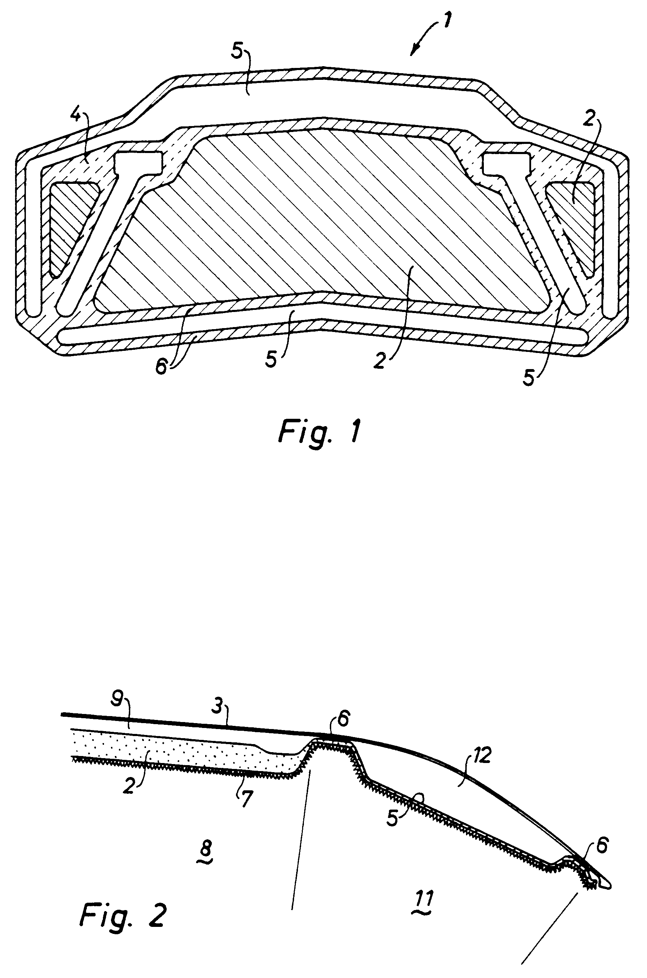

Aus der in Fig. 1 gezeigten schematischen Innenpackung 1 sind die verschiedenen Teilbereiche ersichtlich. Der mittlere und akustisch wirksame Hauptbereich besteht aus wenig verdichtetem Material und ist senkenartig verformt. Diese Verformung 2 ist den akustischen Erfordernissen entsprechend dimensioniert und bildet zusammen mit der Aussenhaut einen Helmholtzresonator. Es versteht sich, dass die der Aussenhaut 3 zugewandte Seite der Innenpackung 1 weitere Vertiefungen oder dissipative Strukturen aufweisen kann, um die schallisolierende Wirkung den geometrischen Gegebenheiten anzupassen und zu maximieren. Die Bereiche ausserhalb des Hauptbereichs sind stärker verdichtet und dienen der Stabilität des gesamten Verbundteils. Insbesondere bilden diese Bereiche eine zusammenhängende, feste Struktur. Erfindungsgemäss weist dieser stabilisierende Bereich sickenartig geformte Versteifungszonen 5 und hochverdichtete Klebzonen 6 auf. Es versteht sich, dass diese Klebzonen 6 dem Rand des Verbundteils 1 folgen. Die anderen stabilisierenden Bereiche werden vorzugsweise mit der Aussenhaut verkittet. Dabei können die sickenartigen Versteifungszonen 5 ebenso gut in den hochverdichteten wie in den stark verdichteten Teilbereichen eingebracht sein.

Die für die Verwendung erforderliche Stabilität kommt erst durch die Verbindung der Innenpackung mit der Aussenhaut zustande, wie dies aus Fig. 2 ersichtlich wird. Deutlich ersichtlich ist die im akustisch wirkenden Hauptbereich 8 liegende Verformung 2 der Innenpackung 1 und der zwischen dieser Verformung 2 und der Aussenhaut 3 gebildete Hohlraum 9. Es versteht sich, dass diese als Helmholtz-Resonatoren wirkenden Hohlräume dem zu absorbierenden Frequenzbereich entsprechend dimensioniert sind. Der stabilisierende Bereich 11 weist Teilbereiche auf, welche einerseits der Versteifung des Verbundteils und andererseits der Verbindung von Innenpackung 1 und Aussenhaut 3 dienen. Die durch die sickenartigen Versteifungszonen 5 gebildeten Hohlräume 12 wirken ebenfalls schalldämmend und können mit zusätzlichen dissipativ wirkenden Strukturen gefüllt sein.

In einer bevorzugten, besonders leichten Ausführungsform besteht die Aussenhaut 3 aus einer 2-3 mm dicken SMC-Haut. Die Innenpackung 1 besteht bei dieser Ausführungsform im wesentlichen aus einem Baumwollvlies, welches mit phenolischen Harzen versehen ist und ein Flächengewicht von 1200 g/m² aufweist. Beidseitig dieses Vlieses ist eine mit aminoplastischen Harzen versehene Glasfasermatte angebracht, deren Flächengewicht etwa 250 g/m² beträgt. Die verwendete Dekorschicht weist ein Flächengewicht von 200 g/m² auf und ist oel- und wasserabweisend behandelt. Als abziehbarer Schutzfilm wird eine doppelschichtige Folie aus Polypropylen mit einem Flächengewicht von 25 g/m² und aus Cellulose-Polyester mit einem Flächengewicht von 23 g/m² verwendet.

Damit lässt sich das Gewicht einer konventionell ausgestatteten Motorhaube von 15,5 kg auf 7,5 kg reduzieren.

Die derart aufgebaute Innenpackung ist porös und damit für ihre schallabsorbierende Funktion in besonderer Weise geeignet. Für den Hauptbereich 8 der Innenpackung 1 wird diese auf eine Dichte von ca. 160 kg/m³ verdichtet. Die starkt verdichteten, stabilisierenden Bereiche 11 werden auf ca. 900 kg/m³ verdichtet, während die hochverdichteten Zonen auf ca. 1200 kg/m³ verdichtet sind.

Insbesondere lässt sich damit aus zwei nichtformhaltenden, d.h. ungenügend stabilen Bauteilen ein formstabiles Verbundteil schaffen, d.h. ein Verbundteil, welches sich bei den erwarteten mechanischen Belastungen nicht verformt.

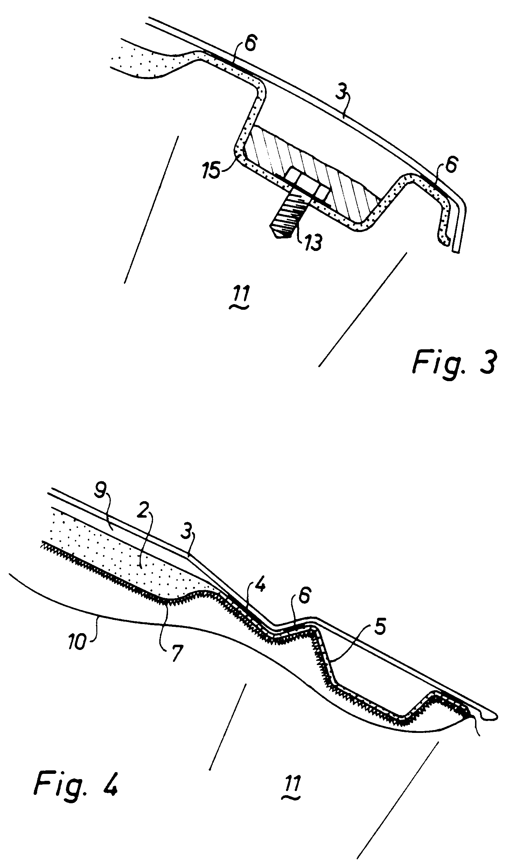

Fig. 3 zeigt schematisch ein weiteres Detail des erfindungsgemässen Verbundteils, welches aus einer Aussenhaut 3 und einer Innenpackung 1 aufgebaut ist. In dieser Ausführungsform weist der stabilisierende Bereich 11 Klebzonen 6 und eine napfförmige Ausbuchtung 15 auf, in welcher ein Halterungselement 13, insbesondere eine Verankerung für einen Riegel oder ein Scharnier, eingeklebt ist.

In dieser bevorzugten Ausführungsform wurde ein unter dem Handelsnamen THEROSON 6026 bekannter Zweikomponentenkleber verwendet. Damit wurde eine Bruchfestigkeit von mehr als 30 daN/cm² erreicht.

Die Versteifungs- und Klebzonen können von jedem Fachmann derart angeordnet und dimensioniert werden, dass das Verbundelement bei der erforderlichen Steifheit ein Maximum an schallabsorbierender Wirksamkeit aufweist.

Fig. 4 zeigt eine weitere Ausgestaltung des erfindungsgemässen Verbundelementes. Es zeigt sich deutlich, dass der Aufbau des Verbundelementes der Gestaltung der Aussenhaut vollkommene Freiheit lässt. Insbesondere können konkave oder konvexe Formen der Aussenhaut mit der Innenpackung problemlos kombiniert werden. Ohne weiteren technischen Aufwand können in der Innenpackung weitere Abstützzonen 4 ausgeformt werden, an welche die Aussenhaut 3 angekittet wird. Geeignete Kitte sind dem Fachmann hinlänglich bekannt.

In einer weiteren Ausgestaltung der Innenpackung 1 wird zwischen der Dekorschicht und der Fasermatte eine poröse Netzschicht angebracht, welche das Eindringen von Mikroorganismen verhindert. Solche Netzschichten sind dem Fachmann hinlänglich bekannt und sollen hier nicht näher beschrieben werden.

Wesentlich für die kostengünstige Herstellung des Verbundteils ist eine Schutzfolie, welche die Dekorschicht vollständig abschliesst und vor äusseren Einflüssen, insbesondere bei der Farbbehandlung, schützt. Für die industrielle Fertigung ist diese Folie mit Abreisslaschen versehen, um deren Entfernung in einfacher Weise zu ermöglichen.

Die Vorteile dieser Schutzfolie liegen insbesondere darin, dass diese nicht auf der Oberfläche angebracht ist, sondern an die Randzonen der Innenpackung angeschweist wird. Damit bleiben alle Oberflächenaspekte unbeeinträchtigt, wie beispielsweise durch Glanzveränderungen, Schlieren, Klebrückstände etc. Durch das Aufbringen der Folie während des formgebenden Pressvorgangs wird das Befestigen dieser Folie an der Innenpackung verfahrenstechnisch wesentlich vereinfacht und kann sogar die zur Entfernung der Folie benötigte Abschälkraft in einfacher Weise geregelt werden.

In einer weiteren Ausgestaltung weist die Innenpackung unter der Schutzfolie noch eine Aluminiumfolie auf, um das akustisch wirkende Faservlies vor möglichen thermischen Schäden während der Lagerung oder des Transports zu bewahren.

Weitere Ausbildungen des erfindungsgemässen Verbundteils liegen im gewöhnlichen Handeln des Fachmanns. So kann beispielsweise anstelle der Schutzfolie und der zusätzlichen Aluminiumfolie eine einzige aluminiumbeschichtete Kunststoffolie verwendet werden.

Es versteht sich, dass zur Rezyklierbarkeit des Verbundteils nur entsprechende Kunststoffe verwendet werden und insbesondere auch die in der Innenpackung fixierten Halterungselemente vorzugsweise aus abbaubaren Kunststoffen bestehen.

Das oben beschriebene Verbundteil kann an Motorfahrzeugen ebenso gut verwendet werden wie an Bau- oder Industriemaschinen, die untolerierbare Schallquellen aufweisen.

## Patentansprüche

1. Formstabiles Verbundteil zur akustischen Abschirmung von Lärmquellen, insbesondere für Motorhauben, mit einer formgebenden Aussenhaut (3) und einer daran befestigten schallisolierenden Innenpackung (1), welche Innenpackung (1) der inneren Form der Aussenhaut (3) entsprechend angepasst ist und senkenartige Verformungen (2) aufweist, welche zusammen mit der Aussenhaut (3) akustisch wirksame Hohlräume (9) bilden,
dadurch gekennzeichnet, dass
die formgebende Aussenhaut (3) eine duroplastische Kunststoffhaut ist,
die Innenpackung (1) aus einem mit einer phenolischen Harzmischung versehenen Faservlies besteht, welches beidseitig eine mit einer aminoplastischen Harzmischung versehene Fasermatte aufweist, und die der Aussenhaut (3) abgewandte Fasermatte mit einer Dekorschicht (7) versehen ist.

2. Verbundteil nach Anspruch 2, dadurch gekennzeichnet, dass ein Hauptbereich (2) der Innenpackung (1) mit senkenartigen Verformungen (2) wenig verdichtet ist,
die Innenpackung (1) mindestens einen stabilisierenden, stark verdichteten Bereich (4, 5, 6) aufweist, in welchem sickenartig geformte Versteifungszonen (5) eingebracht sind und welcher weitere hochverdichtete Teilbereiche mit Klebzonen (6) und Versteifungszonen (5) umfasst,
die Aussenhaut (3) mindestens mit den hochverdichteten Klebzonen (6) verklebt ist.

3. Verbundteil gemäss Anspruch 2, dadurch gekennzeichnet, dass die der Aussenhaut (3) abgewandte Seite der Innenpackung (1) mit einer Schutzfolie (10) versehen ist und die Aussenhaut (3) auf ihrer der Innenpackung (1) abgewandten Seite eine Farblackschicht trägt.

4. Verbundteil gemäss Anspruch 1, dadurch gekennzeichnet, dass an der Innenpackung Halterungselemente (13) zur Befestigung des Verbundteils angebracht sind.

5. Verbundteil gemäss Anspruch 1, dadurch gekennzeichnet, dass alle Bestandteile des Verbundteils aus einfach entsorgbaren und vorzugsweise aus abbaubaren Materialien bestehen.

6. Schallisolierende Innenpackung zur Herstellung eines Verbundteils gemäss Anspruch 1, dadurch gekennzeichnet, dass die Innenpackung (1) aus einem mit einer phenolischen Harzmischung versehenen Faservlies besteht, welches beidseitig eine mit einer aminoplastischen Harzmischung versehene Fasermatte aufweist, von denen eine mit einer Dekorschicht (7) versehen ist, über welche eine abziehbare Schutzfolie (10) angebracht ist.

7. Innenpackung nach Anspruch 6, dadurch gekennzeichnet, dass die Innenpackung (1) festverankerte Befestigungselemente (13) aufweist.

8. Innenpackung nach Anspruch 6, dadurch gekennzeichnet, dass die Befestigungselemente (13) aus Kunststoff bestehen.

9. Innenpackung nach Anspruch 6, dadurch gekennzeichnet, dass zwischen der Fasermatte und der Dekorschicht (7) eine Mikroorganismen abweisende Netzschicht liegt.

10. Verfahren zur Herstellung eines Verbundteils gemäss Anspruch 1, dadurch gekennzeichnet, dass
in einem ersten Schritt,
der vorfabrizierte Aussenhaut-Rohling sauber geschnitten wird,
die mit Befestigungselementen versehene vorfabrizierte Innenpackung gemäss Anspruch 6 aufgebracht wird, und mit dem Aussenhaut-Rohling verklebt wird,
der rohe Verbundteil gewaschen, gespült und getrocknet wird;
in einem zweiten Schritt,
eine Grundierung aufgebracht und eingebrannt wird,
eine Farblackierung aufgebracht und eingebrannt wird und in einem letzten Schritt,
der Schutzfilm entfernt wird.

## Claims

1. Form-stable composite component for the acoustic screening of sources of noise, especially for engine hoods or bonnets, comprising a form-defining outer skin (3) and an acoustically insulating inner packing (1) fixed thereto, which inner packing (1) is adapted to suit the inner form of the outer skin (3) and possesses depression-like deformations (2) which, together with the outer skin (3), form acoustically active cavities (9), characterized in that the form-defining outer skin (3) is a thermosetting plastics skin, the inner packing (1) consists of a fibre tissue provided with a phenolic resin mixture, which tissue possesses on both sides a fibre mat provided with an aminoplastic resin mixture, and the fibre mat remote from the outer skin (3) is provided with a decorative coating (7).

2. Composite component according to Claim 1, characterized in that a main region (2) of the inner packing (1) having depression-like deformations (2) is less compacted, the inner packing (1) has at least one stabilizing, strongly compacted region (4, 5, 6), in which beading-shaped stiffening zones (5) are formed and which possesses further highly compacted partial zones with adhesion zones (6) and stiffening zones (5), and the outer skin (3) is glued at least to the highly compacted adhesion zones (6).

3. Composite component according to Claim 2, characterized in that the side of the inner packing (1) remote from the outer skin (3) is provided with a protective foil (10) and the outer skin (3) carries, on its side remote from the inner packing (1), a coloured lacquer coating.

4. Composite component according to Claim 1, characterized in that holding elements (13) for fixing the composite component are fitted to the inner packing.

5. Composite component according to Claim 1, characterized in that all the constituents of the composite component consist of easily disposable and preferably degradable materials.

6. Acoustically insulating inner packing for the construction of a composite component according to Claim 1, characterized in that the inner packing (1) consists of a fibre tissue provided with a phenolic resin mixture, which possesses on both sides a fibre mat provided with an aminoplastic resin mixture, of which one mat is provided with a decorative coating (7), over which a pull-off protective foil (10) is applied.

7. Inner packing according to Claim 6, characterized in that the inner packing (1) possesses firmly anchored fixing elements (13).

8. Inner packing according to Claim 6, characterized in that the fixing elements (13) are of plastics material.

9. Inner packing according to Claim 6, characterized in that, between the fibre mat and the decorative coating (7), there is microorganisms-repellent net layer.

10. Method of making a composite component according to Claim 1, characterized in that, in a first step, the prefabricated outer skin blank is neatly cut, the prefabricated inner packing provided with fixing elements according to Claim 6 is applied, and is glued to the outer skin blank, the raw composite component is washed, rinsed and dried; in a second step, a primer is applied and baked in, a coloured lacquer is applied and baked in and, in a last step, the protective film is removed.

## Revendications

1. Pièces composite indéformable destinée à l'isolement acoustique de sources de bruit, en particulier pour des capots de moteur, comportant une enveloppe (3) qui donne sa forme à l'élément et une garniture intérieure (1) insonorisante qui y est fixée, cette garniture intérieure (1) étant adaptée en fonction de la forme intérieure de l'enveloppe (3) et présentant des formes (2) du type dépression qui, associées à l'enveloppe (3), forment des cavités (9) acoustiquement actives,
caractérisée en ce que
l'enveloppe (3) qui donne sa forme à l'élément est une peau en matière plastique thermodurcissable,
la garniture intérieure (1) se compose d'une toile de fibres, munie d'un mélange de résines phénoliques, qui présente des deux côtés une natte de fibres munie d'un mélange de résines aminoplastiques et la natte de fibres opposée à l'enveloppe (3) est munie d'une couche décorative (7).

2. Pièce composite selon la revendication 1, caractérisée en ce qu'une zone principale (2) de la garniture intérieure (1) ayant des formes du type dépression est peu comprimée, en ce que la garniture intérieure (1) présente au moins une zone (4, 5, 6) stabilisatrice fortement comprimée dans laquelle sont appliquées des zones de raidissement (5) en forme de moulure et qui englobe d'autres zones partielles très fortement comprimées avec des zones collantes (6) et des zones de raidissement (5), l'enveloppe (3) étant collée au moins avec les zones collantes (6) très fortement comprimées.

3. Pièce composite selon la revendication 2, caractérisée en ce que le côté de la garniture intérieure (1) opposé à l'enveloppe (3) est muni d'une feuille de protection (10) et en ce que l'enveloppe (3) porte une couche de peinture sur son côté opposé à la garniture intérieure (1).

4. Pièce composite selon la revendication 1, caractérisée en que des éléments d'attache (13) sont appliqués sur la garniture intérieure pour fixer la pièce composite.

5. Pièce composite selon la revendication 1, caractérisée en ce que tous les composants de la pièce composite sont réalisés en matériaux faciles à éliminer et de préférence en matériaux dégradables.

6. Garniture intérieure insonorisante pour la fabrication d'une pièce composite selon la revendication 1, caractérisée en ce que la garniture intérieure (1) se compose d'une toile de fibres, munie d'un mélange de résines phénoliques, qui présente des deux côtés une natte de fibres munie d'une mélange de résines aminoplastiques, une de ces nattes étant munie d'une couche décorative (7) sur laquelle on applique une feuille de protection (10) amovible.

7. Garniture intérieure selon la revendication 6, caractérisée en ce que la garniture intérieure (1) présente des éléments de fixation (13) ancrés de façon fixe.

8. Garniture intérieure selon la revendication 6, caractérisée en ce que les éléments de fixation (13) sont réalisés en matière plastique.

9. Garniture intérieure selon la revendication 6, caractérisée en ce que, entre la natte de fibres et la couche décorative (7), est placée une couche en treillis repoussant les micro-organismes.

10. Procédé de fabrication d'une pièce composite selon la revendication 1, caractérisé en ce que,
dans une première étape,
l'ébauche d'enveloppe préfabriquée est découpée proprement,
la garniture intérieure préfabriquée et munie des éléments de fixation est appliquée selon la revendication 6 et est collée à l'ébauche d'enveloppe,
la pièce composite brute est lavée, rincée et séchée; et en ce que,
dans une deuxième étape,
on applique une couche de fond que l'on cuit,
on applique une peinture que l'on cuit
et, dans une dernière étape,
on enlève le film de protection.
